(19) Europäisches Patentamt
European Patent Office
Office européen des brevets

(11) **EP 2 034 275 B1**

(12) **FASCICULE DE BREVET EUROPEEN**

(45) Date de publication et mention
de la délivrance du brevet:
**13.04.2016 Bulletin 2016/15**

(51) Int Cl.:
*G01D 3/08* *(2006.01)*          *G01D 3/036* *(2006.01)*
*G01P 21/00* *(2006.01)*          *G01P 15/18* *(2006.01)*

(21) Numéro de dépôt: **08162813.3**

(22) Date de dépôt: **22.08.2008**

(54) **Dispositif de validation de mesures d'une grandeur cinématique**

Vorrichtung zur Validierung der Maße einer kinematischen Größe

Device for validating measurements of a kinematic dimension.

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **07.09.2007 FR 0757407**

(43) Date de publication de la demande:
**11.03.2009 Bulletin 2009/11**

(73) Titulaire: **SNECMA
75015 Paris (FR)**

(72) Inventeurs:
• **Bornert, Pierre
27200, Vernon (FRANCE) (FR)**
• **Le Gonidec, Serge
27200, Vernon (FRANCE) (FR)**

(74) Mandataire: **Desormiere, Pierre-Louis et al
Cabinet Beau de Loménie
158, rue de l'Université
75340 Paris Cedex 07 (FR)**

(56) Documents cités:
EP-A- 1 053 917          WO-A-2007/031606
US-A1- 2003 163 282

**Description**

Domaine de l'invention

La présente invention se rapporte au domaine général de validation de mesures d'une grandeur cinématique et de la détection de pannes de mesures. Plus particulièrement, elle se rapporte à un dispositif et une méthode automatique de détection d'anomalies de mesures vibratoires et éventuellement suivie d'une reconfiguration pour aboutir à la meilleure estimation possible de la grandeur mesurée.

Arrière-plan de l'invention

Il est connu des méthodes pour l'identification de la qualité des mesures d'une grandeur physique (par exemple, pression, température, vitesse de rotation, déplacement) par l'utilisation du principe de redondance, par une comparaison directe des valeurs mesurées.

En particulier, pour valider une mesure d'une grandeur cinématique (vitesse, déplacement) d'un objet, on doit mesurer des composantes de cette grandeur par des capteurs en utilisant pour chaque composante, un capteur principal et au moins un autre capteur redondant mesurant la même composante. Ainsi, pour mesurer la grandeur selon trois composantes, on a besoin d'au moins six capteurs de mesures qui peuvent être encombrants surtout si l'espace autour de l'objet est très limité.

Un autre inconvénient résulte du fait que la méthode de redondance n'est pas envisageable pour certains types de grandeurs cinématiques. En particulier, pour mesurer des vibrations, la redondance à l'identique n'est pas concevable. De plus, il est très difficile de comparer des signaux vibratoires qui présentent généralement des fréquences élevées.

Objet et résumé de l'invention

L'invention est définie dans les revendications annexées.

La présente invention propose donc un dispositif de validation de mesures d'une grandeur cinématique émanant d'un objet sur lequel sont disposés, selon trois axes principaux concourants formant une base e={e₁ e₂ ... e_p} d'un espace physique à p=3 dimensions, des capteurs principaux pour mesurer des composantes $V_j$ de ladite grandeur cinématique, caractérisé en ce qu'il comporte :

- au moins deux capteurs supplémentaires pour mesurer au moins deux composantes supplémentaires de ladite grandeur cinématique, lesdits au moins deux capteurs supplémentaires étant disposés sur ledit objet selon au moins deux axes supplémentaires concourant auxdits trois axes principaux et non contenus dans l'un quelconque des plans définis par tout couple de deux axes choisis parmi lesdits trois axes principaux, lesdits axes principaux et supplémentaires formant un ensemble $a=\{a_1, a_2, a_3, ... a_q\}$ de q axes d'observation et lesdits capteurs principaux et supplémentaires formant des capteurs d'observation ;
- des moyens de détermination pour déterminer un estimateur représentatif de ladite grandeur cinématique à partir desdites composantes délivrées par lesdits capteurs d'observation ;

les moyens de détermination de l'estimateur représentatif de la grandeur cinématique comportant :

- des premiers moyens de calcul pour calculer une matrice d'observation $M$ synthétisant la configuration géométrique desdits axes d'observation, la matrice d'observation $M$ de dimension pxq étant définie par M=C.A, C étant la matrice des cosinus directeurs de la base e et A étant la composante matricielle de l'ensemble a de q axes ;
- des premiers moyens de calcul pour calculer une matrice d'estimation $L$ à partir de ladite matrice d'observation vérifiant $L.^TM = I_p$ ; et
- des premiers moyens de calcul pour calculer ledit estimateur représentatif de la grandeur cinématique en fonction de ladite matrice d'estimation et desdites composantes mesurées par lesdits capteurs d'observation,
- des moyens de validation pour valider ladite détermination de l'estimateur représentatif de la grandeur cinématique ;

  - des moyens de détection d'erreur pour détecter une erreur de mesure associée à ladite détermination de l'estimateur représentatif de la grandeur cinématique, les moyens de validation et/ou moyens de détection d'erreur comportant :

- des deuxièmes moyens de calcul pour calculer une matrice de parité $N$ à partir de ladite matrice d'observation $M$, la matrice de parité $N$ étant définie par $N.^TM = 0$; et
- des deuxièmes moyens de calcul pour calculer un vecteur de parité $W$ associé à ladite matrice de parité et auxdites composantes de la grandeur cinématique mesurées par les capteurs d'observation permettant de vérifier la validité de l'estimateur représentatif de la grandeur cinématique ou de détecter une erreur de mesure associée à ladite détermination de l'estimateur, le vecteur de parité *W* étant défini par *W=N.Z* où *Z* est une représentation matricielle de l'erreur de mesure,

- des moyens de localisation pour localiser des composantes valides de ladite grandeur cinématique n'engendrant pas ladite erreur de mesure ; et
- des moyens de reconstitution pour reconstituer un nouvel estimateur représentatif de ladite grandeur cinématique à partir desdites composantes valides délivrées par lesdits capteurs d'observation.

Ainsi, le montage multi-axes selon l'invention permet de valider la mesure des signaux correspondant à la grandeur cinématique. Ceci permet d'augmenter la fiabilité globale de la métrologie et donc de fiabiliser la surveillance de l'objet pour préserver son fonctionnement. De plus, il permet de détecter des anomalies ou erreurs de mesures et de reconfigurer un nouvel estimateur en cas de défaut d'un ou de plusieurs capteurs d'observation pour aboutir à la meilleure estimation possible de la grandeur cinématique.

La grandeur cinématique peut être estimée en utilisant tous les capteurs d'observation.

Le vecteur de parité correspond à une image de l'erreur réelle et ainsi on peut se baser sur le vecteur de parité pour obtenir le maximum d'informations sur l'erreur de mesure. Ceci permet de fiabiliser la mesure de la grandeur cinématique.

Les moyens de validation et/ou moyens de détection d'erreur comportent en outre :

- des moyens de calcul pour calculer une matrice des poids P à partir de ladite matrice de parité et desdites composantes de la grandeur cinématique, la matrice des poids P étant égale à N.diag(V),
- des moyens de calcul pour calculer un vecteur de sélection à partir de ladite matrice des poids et dudit vecteur de parité permettant de discriminer des relations significatives de cohérence ou d'incohérence entre lesdites composantes de la grandeur cinématique,
- des moyens de calcul pour calculer une matrice de quantification de cohérence permettant de quantifier les niveaux de validité desdites composantes de la grandeur cinématique,
- des moyens de calcul pour déduire un vecteur de confiance à partir de la matrice de quantification de cohérence permettant de donner le niveau de confiance de chaque composante de la grandeur cinématique mesurée par chacun des capteurs d'observation, et
- des moyens de calcul pour déduire une liste desdites composantes valides de ladite grandeur cinématique.

Ainsi, on peut quantifier la validité de chaque mesure et faciliter la sélection des mesures valides à retenir.

Avantageusement, le dispositif comporte des moyens d'initialisation pour repérer avec une précision déterminée lesdits axes supplémentaires par rapport aux axes principaux.

Ainsi, au départ, on peut se permettre de ne pas connaître la position des axes supplémentaires avec une grande précision. Ceci permet d'éviter une construction délicate du dispositif et les incertitudes qui en découlent.

Selon un mode de réalisation de la présente invention, les axes principaux comportent un premier axe, un deuxième axe et un troisième axe formant un trièdre orthogonal direct, et au moins un axe supplémentaire forme un angle de 45° par rapport au deuxième axe et les directions des premier et troisième axes sont symétriques par rapport au deuxième axe. Ainsi, le dispositif peut être réalisé de manière simple.

Selon une variante, les trois axes principaux forment un trièdre orthogonal direct, et au moins un axe supplémentaire occupe une position symétrique par rapport aux trois axes principaux. Ainsi, le dispositif peut être réalisé de telle manière que les erreurs soient mieux réparties entre les mesures.

Selon une particularité de l'invention, les capteurs principaux correspondent à des accéléromètres mesurant des composantes axiale, radiale et tangentielle de la grandeur cinématique et ledit au moins un capteur supplémentaire correspond à un accéléromètre de redondance.

Avantageusement, la grandeur cinématique correspond à une grandeur de vibration.

D'une manière classique, il n'est pas possible de réaliser une mesure redondante d'une grandeur de vibration car on ne peut pas avoir deux capteurs de vibrations sur un même axe. Ainsi, la présente invention permet de valider la mesure des signaux correspondant à la vibration afin de fiabiliser la surveillance de l'objet et éventuellement de détecter les erreurs de mesures et de régénérer les signaux de vibration en cas de défaut d'un ou de plusieurs capteurs d'observation.

Selon un exemple de la présente invention, ledit objet source de la grandeur cinématique est une machine tournante.

L'invention vise aussi une méthode de validation de mesures d'une grandeur cinématique émanant d'un objet sur lequel sont disposés, selon trois axes principaux concourants formant une base e={$e_1$ $e_2$ ... $e_p$} d'un espace physique à p=3 dimensions, des capteurs principaux pour mesurer des composantes de ladite grandeur cinématique, caractérisée en ce qu'elle comporte les étapes suivantes :

- mesurer au moins deux composantes supplémentaires de ladite grandeur cinématique au moyen d'au moins deux capteurs supplémentaires disposés sur ledit objet selon au moins deux axes supplémentaires concourant auxdits trois axes principaux, et non contenus dans l'un quelconque des plans définis par tout couple de deux axes choisis parmi les trois axes principaux, lesdits axes principaux et supplémentaires formant un ensemble $a=\{a_1, a_2, a_3, ... a_q\}$ de $q$ axes d'observation, et lesdits capteurs principaux et supplémentaires formant des capteurs d'observation;
- déterminer un estimateur représentatif de ladite grandeur cinématique à partir desdites composantes délivrées par lesdits capteurs d'observation ; et
- valider ladite détermination de l'estimateur représentatif de la grandeur cinématique.

L'invention vise également un programme d'ordinateur téléchargeable depuis un réseau de communication et/ou stocké sur un support lisible par ordinateur et/ou exécutable par un microprocesseur, comprenant des instructions de codes de programme pour l'exécution des étapes de la méthode de validation, lorsqu'il est exécuté sur un ordinateur.

Brève description des dessins

D'autres particularités et avantages du procédé et du dispositif selon l'invention ressortiront à la lecture de la description faite ci-après, à titre indicatif mais non limitatif, en référence aux dessins annexés sur lesquels :

- les figures 1A à 1C illustrent des algorithmes décrivant la méthode de validation selon invention ;
- la figure 2 illustre très schématiquement un dispositif de validation selon l'invention ; et
- la figure 3 illustre une configuration des axes d'observation selon l'invention ;
- la figure 4 illustre très schématiquement un autre exemple du dispositif de validation selon l'invention ; et
- la figure 5 illustre une configuration de cinq axes d'observation selon l'invention.

Description détaillée de modes de réalisation

La présente invention présente un dispositif et une méthode automatique de détection d'anomalies de mesures d'une grandeur physique ou cinématique émanant d'un objet suivie d'une reconfiguration pour aboutir à la meilleure estimation possible de la grandeur mesurée.

Cette méthode est basée sur la redondance des mesures, dans un espace de parité, par l'adjonction d'au moins une mesure supplémentaire de la grandeur émanant de l'objet, selon au moins un axe supplémentaire.

Dans la suite, on décrit l'invention d'une manière générale dans un espace E à p dimensions. Ensuite, on décrit des modes de réalisations particuliers dans un espace géométrique à trois dimensions. En effet, la méthode de l'invention peut être appliquée à toute mesure d'une grandeur vectorielle, même dans un espace vectoriel différent de l'espace géométrique à trois dimensions.

Ainsi, on définit un espace physique E à p dimensions, c'est-à-dire, $E=R^p$. Cet espace physique E est repéré par une base normée $e$ :

$$[E.1] \quad e = \{e_1 \quad e_2 \quad ... \quad e_p\},$$

dont la correspondance matricielle est:

$$[E.2] \quad E = \begin{bmatrix} E_1 & E_2 & ... & E_p \end{bmatrix} = I_p,$$

$E_i$ étant la composante de $e_i$ dans la base e et Ip étant une matrice identité pxp.

On dispose de $q$ mesures émanant d'un ensemble $a$ de $q$ axes d'observation couvrant l'espace **E,** avec $q>p$. Chaque axe d'observation est repéré par un vecteur normé $a_j$, l'ensemble $a$ définissant le système forment un ensemble de rang $p$ (rang maximal) :

$$[E.3] \quad a = \{a_1 \quad a_2 \quad ... \quad a_q\}$$

dont la correspondance matricielle est:

*[E.4] A = ⌊A<sub>1</sub> A<sub>2</sub> ... A<sub>q</sub>⌋, A<sub>i</sub> étant la composante de a<sub>i</sub> dans la base e.*

La grandeur physique *x* recherchée peut être définie par un vecteur de l'espace physique *E* et peut se décomposer en scalaires selon les axes d'observation:

$$[E.5] \quad \forall j \in 1:q \quad Y_j = \left\langle a_j, x \right\rangle.$$

Le sens de ces projections orthogonales est d'ordre physique (et non mathématique): elles sont liées à l'énergie de la grandeur physique récupérée sur un axe particulier.

La matrice C des cosinus directeurs de la base e est définie de la manière suivante:

$$[E.6] \quad \forall i, j \in 1:p \quad C_{ij} = \left\langle e_i, e_j \right\rangle.$$

La relation (E.5) prend alors la forme matricielle suivante:

$$[E.7] \quad Y = {}^T A \cdot C \cdot X ,$$

Y correspond aux composantes canoniques de la grandeur x selon les axes d'observation a.

On définit la matrice d'observation *M* de dimension *pxq* par:

$$[E.8] \quad M = C \cdot A$$

La relation (E.7) s'écrit alors aussi:

$$[E.9] \quad Y = {}^T M \cdot X$$

Dans la pratique, la mesure d'une grandeur vectorielle *x* se fait sous forme de scalaires, de sorte que l'on mesure en fait les grandeurs $Y_j$. La mesure $V_j$ de x selon $a_j$, la grandeur $Y_j$ et l'erreur de mesure commise $Z_j$ sont reliées par la relation suivante:

$$[E.10] \quad \forall j \in 1:q \quad V_j = Y_j + Z_j.$$

La relation (E.10) peut prendre la forme matricielle condensée suivante, dite relation de mesure:

$$[E.11] \quad V = Y + Z$$

ou encore, compte tenu de (E.9) :

$$[E.12] \quad V = {}^T M \cdot X + Z$$

Notons que les grandeurs x, *Y,* et *Z* sont inaccessibles en tant que telles.

Pour estimer la grandeur physique, on utilise une matrice d'estimation *L* (de dimension *pxq*) vérifiant:

$$[E.13] \quad L \cdot {}^T M = I_p \Rightarrow L .$$

Une matrice d'estimation particulière peut être obtenue par la méthode des moindres carrés:

$$[E.14] \quad L_{mc} = \left(M^{.T}M\right)^{-1} \cdot M \; .$$

On peut aussi définir un estimateur linéaire $U$ donné par:

$$[E.15] \quad U = L \cdot V$$

$U$ est la colonne relative à la base $e$ d'un vecteur $u$ de E (c'est-à-dire, composantes *de u* dans la base $e$) sensé estimer la grandeur physique x.

En multipliant (E.12) par $L$ et en y injectant (E.15), on obtient la relation dite d'estimation:

$$[E.16] \quad U - X = L \cdot Z$$

Ainsi, en l'absence d'erreur de mesure, l'estimateur coïncide avec la grandeur physique.

Par ailleurs, on définit, une matrice de parité $N$ (de dimension $rxq$, $r$ étant le nombre d'équation de parité) qui est une matrice non nulle par la relation suivante:

$$[E.17] \quad N^{.T}A = 0 \Leftrightarrow N^{.T}M = 0$$

Une matrice de parité particulière est celle dont les lignes sont orthonormales:

$$[E.18] \quad N_{or}{}^{.T}N_{or} = 1_r \; .$$

De même, on définit la matrice des poids $P$ (de dimension $rxq$) par:

$$[E.19] \quad P = N \cdot \mathrm{diag}\left(V\right).$$

Ce qui revient à:

$$[E.20] \quad \forall k \in 1:r \quad \forall j \in 1:q \quad P_{kj} = N_{kj} \cdot V_j \; ,$$

$P_{kj}$ étant le poids de la j-ème mesure dans la k-ème relation de parité, $N_{kj}$ étant le coefficient de la j-ème mesure dans la k-ème relation de parité et $V_j$ étant la mesure de x selon $a_j$.

Il peut être commode d'introduire les lignes $P_k$:

$$[E.21] \quad P = \begin{bmatrix} P_1 \\ P_2 \\ ... \\ P_r \end{bmatrix}$$

Ensuite, un vecteur de parité $W$ (formé par des composantes canoniques) peut être défini par:

$$[E.22] \quad W = N \cdot V \; .$$

Il peut également se déduire de P.

$$[E.23] \quad \forall k \in 1:r \quad W_k = \sum_{j=1:q} P_{kj} = \mathrm{sum}(P_k)$$

En multipliant (E.12) par *N* et en y injectant (E.17), on obtient la relation dite de parité:

$$[E.24] \quad W = N \cdot Z$$

Le vecteur parité, accessible (relation (E.22)), s'annule en même temps que les erreurs de mesure. Ainsi, la cohérence entre les mesures redondantes permet d'évaluer l'erreur de mesure.
La comparaison de $W_k$ avec $P_k$ permet de discriminer les relations significatives de cohérence ou d'incohérence, qu'il convient donc d'exploiter.
Alors, on définit un vecteur de sélection *S* indiquant ces relations significatives:

$$[E.25] \quad \forall k \in 1:r \quad ;$$

$$S_k = \begin{cases} 1 & \text{si la kième relation de parité reflète une cohérence entre mesures} \\ 0 & \text{si la k-ième relation de parité est non significative (indécision)} \\ -1 & \text{si la k-ième relation de parité révèle une incohérence entre mesures} \end{cases}$$

A titre d'exemple, $S_k$ peut être défini de la manière suivante :

$$[E.26] \quad S_k = \begin{cases} \dfrac{|W_k|}{\|P_k\|_1} > s_1 \Rightarrow S_k = -1 & \text{avec par exemple} \quad \|P_k\|_1 = \max_{j=1:q}\left(|P_{kj}|\right) \\[3mm] \dfrac{|W_k|}{\|P_k\|_0} < s_0 \Rightarrow S_k = 1 & \text{avec par exemple} \quad \|P_k\|_0 = \min_{j=1:q}\left(|P_{kj}|\right) \\[3mm] \quad S_k = 0 \quad \text{sinon} \end{cases}$$

Après avoir sélectionné les relations de parité pertinentes, la comparaison de $W_k$ avec $P_k$ permet de les exploiter.
On définit alors, la matrice de quantification *Q* (de dimension *rxq)* quantifiant les niveaux de validité des mesures:

$$[E.27] \quad \forall k \in 1:r \quad \forall j \in 1:q$$

$$Q_{kj} = \begin{cases} > 0 & \text{représente le niveau de cohérence de la j-ème mesure dans la k-ième relation de parité} \\ 0 & \Leftarrow \quad S_k = 0 \\ < 0 & \text{représente le niveau d'incohérence de la j-ème mesure dans la k-ième relation de parité} \end{cases}$$

A titre d'exemple, $\forall k \in 1{:}r \; \forall j \in 1{:}q$ :

$$[E.28] \begin{cases} S_k = 0 \quad \Rightarrow \quad \forall j \in 1:q \quad Q_{kj} = 0 \\ S_k = 1 \quad \Rightarrow \quad \forall j \in 1:q \quad Q_{kj} = \dfrac{|P_{kj}|}{|W_k|} \quad \text{(répartition en fonction des poids)} \\ S_k = -1 \quad \Rightarrow \quad \forall j \in 1:q \quad Q_{kj} = -\dfrac{|W_k|}{\|P_k\|} \end{cases}$$

(partage d'une erreur dont on ne connaît pas l'origine)

$Q_{kj}$ étant le niveau de cohérence (ou d'incohérence) de la j-ème mesure dans la k-ème relation de parité.

Après avoir quantifié les niveaux de validité par mesure et par relation de parité, il s'agit de faire une synthèse par mesure, par une logique dépendant de la criticité.

Alors, on définit un vecteur de confiance $R$ donnant le niveau de confiance par mesure, résultant de la matrice $Q$:

$$[E.29] \quad \forall j \in 1:q \quad R_j = \begin{cases} > 0 \quad \text{est le niveau de confiance atteint par la j-ème mesure} \\ 0 \quad \text{indique une indécision concernant la j-ème mesure} \\ < 0 \quad \text{est le niveau d'anomalie atteint par la j-ème mesure} \end{cases}$$

$R_j$ étant le niveau de confiance (ou d'anomalie) atteint par la j-ème mesure.

Par exemple, pour une stratégie systématique, ce qui impose une quantification préalable soignée :

$$[E.30] \quad \forall j \in 1:q \quad R_j = \sum_{k=1:r} Q_{kj}$$

Pour une stratégie prudente (anomalie de forte criticité) :

$$[E.31] \quad \forall j \in 1:q \quad R_j = \min_{k=1:r}(Q_{kj})$$

Finalement, pour une stratégie optimiste (anomalie de faible criticité) :

$$[E.32] \quad \forall j \in 1:q \quad R_j = \max_{k=1:r}(Q_{kj})$$

Alors, on peut déduire la liste des mesures valides par leurs indices.

$$[E.33] \quad J = \{j \in 1:q \quad V_j \ valide\}$$

En effet, cette liste peut être établie par simple seuillage sur $R$:

$$[E.34] \quad J = \{j \in 1:q \quad R_j > r\}$$

En variante, en se fixant un nombre a priori de mesures à conserver, en peut systématiquement sélectionner les $s$ meilleures ( $p \leq s \leq q$), voire plus si ex aequo:

$$[E.35] \quad J = \left\{ j_1,...,j_s \in 1:q \quad \forall j \in (1:q) \notin J \quad R_{j_l} \geq R_i \right\}$$

On peut également combiner les deux approches, en se fixant un seuil *r* et un minimum de mesures *s* à conserver. Ainsi, si *r* conduit à un nombre de mesures inférieur à *s*, on oublie *r* et on conserve les *s* meilleures, voire plus si ex aequo.

Par ailleurs, pour reconstituer le système, on peut rejeter les mesures en panne pour ne considérer que le système réduit des mesures restantes. On est alors en présence d'un nouveau système de parité qui se traite avec les mêmes outils que ceux vus précédemment. Les systèmes réduits ainsi obtenus sont appelés "systèmes mutilés".

En effet, supposons que, parmi les *q* mesures initiales, seules $q_J$ mesures soient valides (les autres étant en défaut). On peut alors définir les caractéristiques du nouveau système ainsi obtenu, dit système mutilé de la manière suivante :

Les indices des mesures valides restantes sont regroupés dans le vecteur *J*:

$$[E.36] \quad J = \begin{bmatrix} j_1 & j_2 & ... & j_{q_J} \end{bmatrix}$$

La matrice *pxp* des cosinus directeurs de la base *e* reste inchangée:

$$[E.37] \quad {}_J C = C$$

Les axes d'observation restants sont:

$$[E.38] \quad {}_J a = a_J$$

La matrice des axes d'observation dans la base e est donc:

$$[E.39] \quad {}_J A = A_J$$

On déduit (par la relation (E.8)) que la matrice d'observation *M* est:

$$[E.40] \quad {}_J M = M_J$$

Le vecteur de mesure à considérer est naturellement:

$$[E.41] \quad {}_J V = V_J$$

Ensuite, on applique les diverses équations vues jusque là (matrice d'estimation, etc.), tout en constatant que la condition $q_J \geq p$ doit être vérifiée.

En particulier et afin de garantir un fonctionnement sans exception, il convient de définir une stratégie spécifique dans le cas où un nombre insuffisant de mesures seraient retenues valides. Mathématiquement, cela se traduit par $0 \leq q_J < p$ ($q_J = 0$ correspond à un vecteur *J* vide).

Remarquons que l'on n'est susceptible d'être confronté à ce cas de figure que lorsque la construction de *J* se fait par simple seuillage (voir relation (E.34)).

Pour ne pas bloquer le déroulement du calcul par cette exception, il suffit de définir les grandeurs du système mutilé correspondant à un tel *J*, noté $J_0$.

Dans ce cas, on peut avantageusement choisir de revenir à l'ensemble des mesures initiales, ce qui revient à traiter le problème comme si $J_0 = 1 : q$, soit:

$$[E.42] \quad {}_{J_0} C = C$$

$$[E.43] \quad _{J_0}a = a$$

$$[E.44] \quad _{J_0}A = A$$

$$[E.45] \quad _{J_0}M = M$$

$$[E.46] \quad _{J_0}V = V$$

Avantageusement, l'estimation à partir d'un système mutilé est associée à un niveau de confiance (ceci est surtout avantageux dans le cas dégradé dit $J_0$, où la stratégie consiste à faire le même calcul que si toutes les mesures étaient valides).

Ce niveau de confiance noté $_J T$ découle naturellement des niveaux de confiance individuels $R_J$ des mesures effectivement retenues pour le calcul ($R$ tout entier dans le cas $J_0$).

Par exemple, pour une stratégie systématique (imposant une quantification soigneuse):

$$[E.47] \quad _J T = \sum_{j=J} R_j$$

$$[E.48] \quad _{J_0}T = \sum_{j=1:q} R_j = \mathrm{sum}(R)$$

Pour une stratégie prudente (forte criticité):

$$[E.49] \quad _J T = \min_{j=J}(R_j)$$

$$[E.50] \quad _{J_0}T = \min_{j=1:q}(R_j) = \min(R).$$

Dans la pratique, on connaît les axes d'observation $a$, tout au moins avec une certaine précision (qui traduit les écarts entre la réalisation et la définition du dispositif de mesure).

Aussi peut-on construire une base $e$ à partir de $p$ axes d'observation non liés, de préférence avec ceux dont la connaissance est la plus fiable et précise (on appelle ces axes les axes principaux).

Quitte à renuméroter, on n'enlève rien à la généralité en considérant que ces derniers portent les premiers numéros (1 à $p$):

$$[E.51] \quad \forall i \in 1:p \quad e_i = a_i$$

Pour mieux distinguer ces axes principaux des autres, dits axes supplémentaires ou redondants, on introduit les vecteurs $b_k$:

$$[E.52] \quad \forall k \in 1:q-p \quad b_k = a_{p+k}$$

l'ensemble définissant le système:

$$[E.53] \quad b = \{b_1 \quad b_2 \quad ... \quad b_{q-p}\}$$

dont la correspondance matricielle est:

$$[E.54] \quad B = \begin{bmatrix} B_1 & B_2 & ... & B_{q-p} \end{bmatrix}$$

Dans ce cas $A$ est de la forme:

$$[E.55] \quad A = \begin{bmatrix} I_p & B \end{bmatrix}$$

On déduit immédiatement de (relation (E.55)) une matrice de parité $N$ (c'est-à-dire vérifiant la définition (relation (E.17)):

$$[E.56] \quad N = \begin{bmatrix} {}^T B & -I_{q-p} \end{bmatrix}.$$

Par ailleurs, on peut se permettre d'avoir une certaine latitude sur la prédétermination des axes d'observation.

En effet, on peut se permettre de méconnaître les axes supplémentaires (redondants), ce qui peut être très pratique, surtout lorsque le montage instrumental est délicat à réaliser. A la limite, il suffirait de connaître l'existence et le nombre d'axes redondants sans connaître les relations qui les lient aux axes principaux.

Les relations entres les axes principaux et supplémentaires peuvent être déterminées de manière automatique.

Avec le repérage choisi, ce problème revient à estimer la matrice $B$. Ainsi, en partant de la relation de parité $N \cdot V = N \cdot Z$, on obtient, avec la matrice de parité $N$ particulière choisie précédemment:

$$[E.57] \quad {}^T B \cdot V_{1:p} = V_{p+1:q} + N \cdot Z$$

Cette relation est valable à chaque instant, et en l'appliquant à des instants distincts $t_1, t_2, ..., t_p$, on obtient l'équation matricielle suivante:

$$ {}^T B \cdot \begin{bmatrix} V_{1:p}(t_1) & V_{1:p}(t_2) & ... & V_{1:p}(t_p) \end{bmatrix} = \begin{bmatrix} V_{p+1:q}(t_1) & V_{p-1:q}(t_2) & ... & V_{p+1:q}(t_p) \end{bmatrix} + N \cdot \begin{bmatrix} Z(t_1) & Z(t_2) & ... & Z(t_p) \end{bmatrix} $$

Pour peu que les fluctuations des mesures soient "naturelles", la matrice $pxp$ obtenue à partir des vecteurs $V_{1:p}(t_i)$ est inversible, d'où:

$$[E.58] \quad B = \begin{bmatrix} {}^T V_{1:p}(t_1) \\ {}^T V_{1:p}(t_2) \\ ... \\ {}^T V_{1:p}(t_p) \end{bmatrix}^{-1} \cdot \left( \begin{bmatrix} {}^T V_{p+1:q}(t_1) \\ {}^T V_{p+1:q}(t_2) \\ ... \\ {}^T V_{p+1:q}(t_p) \end{bmatrix} + \begin{bmatrix} {}^T Z(t_1) \\ {}^T Z(t_2) \\ ... \\ {}^T Z(t_p) \end{bmatrix} \cdot {}^T N \right)$$

A partir de cette équation, plusieurs méthodes d'estimation pratiques sont possibles:

Dans le cas idéal, il est possible de définir une zone de calibrage précise, c'est-à-dire des instants pendant lesquels l'erreur de mesure Zest négligeable, auquel cas la relation (E.55) fournit:

$$[E.59] \quad B \approx \begin{bmatrix} {}^T V_{1:p}(t_1) \\ {}^T V_{1:p}(t_2) \\ \dots \\ {}^T V_{1:p}(t_p) \end{bmatrix}^{-1} \cdot \begin{bmatrix} {}^T V_{p+1:q}(t_1) \\ {}^T V_{p+1:q}(t_2) \\ \dots \\ {}^T V_{p+1:q}(t_p) \end{bmatrix}$$

Sinon, il est possible de définir une zone de calibrage soumise à du bruit de faible niveau, c'est-à-dire des instants pendant lesquels l'erreur de mesure $Z$ reste faible et se comporte selon une distribution centrée, auquel cas la relation (E.59) peut être exploitée sur $n$ systèmes du type $t_1, t_2, \dots, t_p$ :

$$[E.60] \quad B \approx \mathrm{mean} \left( \begin{bmatrix} {}^T V_{1:p}(t_1) \\ {}^T V_{1:p}(t_2) \\ \dots \\ {}^T V_{1:p}(t_p) \end{bmatrix}^{-1} \cdot \begin{bmatrix} {}^T V_{p+1:q}(t_1) \\ {}^T V_{p+1:q}(t_2) \\ \dots \\ {}^T V_{p+1:q}(t_p) \end{bmatrix} \right)_{j=1:n}$$

Enfin, dans le cas le plus défavorable, l'erreur de mesure $Z$ se comporte de manière totalement imprévisible (bruit non centré, pics aléatoires, ...). On peut alors effectuer une étude statistique, par exemple en appliquant la relation (E.59) à $n$ systèmes du type $t_1, t_2, \dots, r_p$, puis en établissant un histogramme pour chaque scalaire $B_{ij}$, à partir duquel on vérifie qu'une valeur se dégage qui est retenue alors comme estimateur (valeur la plus probable) :

$$[E.61] \quad B \approx \max \left( \mathrm{hist} \left( \begin{bmatrix} {}^T V_{1:p}(t_1) \\ {}^T V_{1:p}(t_2) \\ \dots \\ {}^T V_{1:p}(t_p) \end{bmatrix}^{-1} \cdot \begin{bmatrix} {}^T V_{p+1:q}(t_1) \\ {}^T V_{p+1:q}(t_2) \\ \dots \\ {}^T V_{p+1:q}(t_p) \end{bmatrix} \right)_{j=1:n} \right)$$

Ces estimateurs sont très faciles à mettre en oeuvre puisqu'ils ne dépendent que des mesures.

Dans tous les cas, il faut bien distinguer la phase d'initialisation servant à estimer $B$, pendant laquelle on ne cherchera pas à analyser les grandeurs physiques, de la phase de mesure où $B$ ainsi déterminée interviendra dans l'estimation des mesures. On peut même traiter des systèmes lentement variables (par rapport au pas de calcul) en alternant phases d'initialisation et phases de mesure, ou plus précisément en les parallélisant, chaque phase d'initialisation servant à la phase de mesure suivante.

Afin de déduire automatiquement les directions des axes d'observation supplémentaires (redondants), on se place dans l'hypothèse où les directions des axes principaux sont connues, c'est-à-dire, avec le repérage choisi $e = \{a_1\ a_2 \dots a_p\}$, qu'on suppose connue la matrice $C$.

D'après les relations (E.8) et (E.55), on trouve immédiatement $M = [C\ C \cdot B]$. Posons la matrice $D$ :

$$[E.62] \quad D = C \cdot B$$

On a ainsi :

$$[E.63] \quad M = \begin{bmatrix} C & D \end{bmatrix}$$

Les cosinus directeurs correspondent exactement à la matrice $D$, puisque :

**12**

$$\textbf{\textit{[E.64]}} \quad \forall k \in 1:q-p \quad \forall i \in 1:p \quad D_{ik} = \langle e_i, b_k \rangle$$

Ainsi, connaissant *C*, ayant estimé *B,* la relation (E.62) fournit l'estimateur de *D.*

Les angles entre axes redondants et axes principaux (de base) correspondent à la matrice:

$$\textbf{\textit{[E.65]}} \quad \Delta = \mathrm{acos}(D)$$

chaque élément étant:

$$\textbf{\textit{[E.66]}} \quad \forall k \in 1:q-p \quad \forall i \in 1:p \quad \Delta_{ik} = \mathrm{acos}(D_{ik})$$

Dans le cas d'un espace physique géométrique ($p \leq 3$) ces angles permettent de traduire très concrètement la disposition des axes d'observation.

Le problème traité peut se résumer ainsi:

- on a supposé les axes principaux connus, via la matrice *C*;
- on a déterminé automatiquement les axes redondants relativement aux axes principaux, via la matrice *B.*

Cependant, *B a* été estimée exclusivement à partir des mesures *V*, donc à aucun moment, on n'a fait intervenir la normalisation des vecteurs unitaires des axes.

Celle-ci est vérifiée pour les axes principaux par la relation (E.6):

$$\mathrm{diag}(C) = 1_{p,1}$$

Pour les axes redondants elle se traduit par:

$$\textbf{\textit{[E.67]}} \quad \mathrm{diag}({}^{T}B \cdot C \cdot B) = 1_{q-p,1}$$

Ce qui s'écrit aussi, en considérant les colonnes de *B*:

$$\textbf{\textit{[E.68]}} \quad \forall k \in 1:q-p \quad {}^{T}B_k \cdot C \cdot B_k = 1.$$

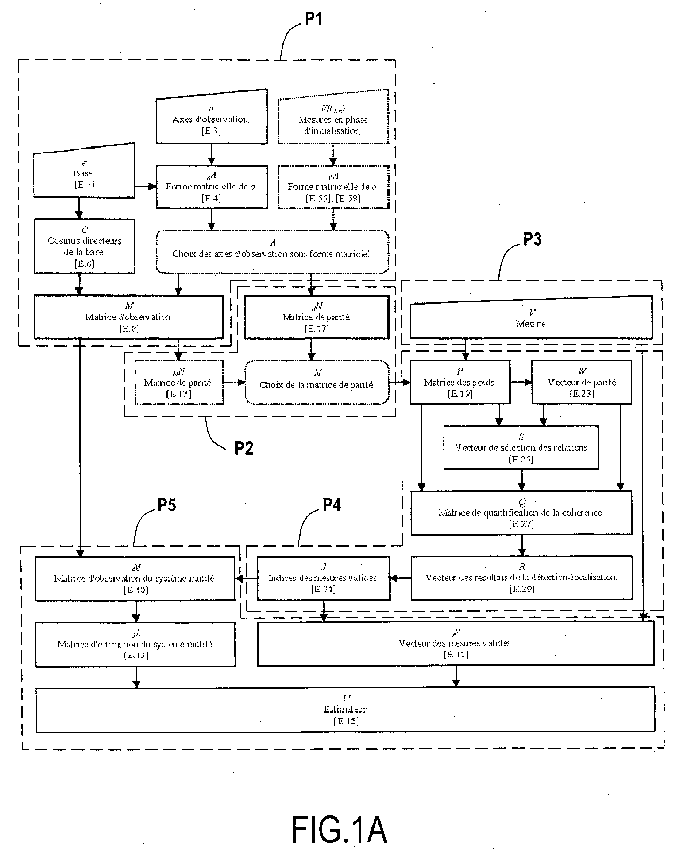

Les figures 1A à 1C illustrent différents algorithmes résumant la méthode exposée ci-dessus.

Chaque bloc représente une fonction pouvant avoir plusieurs entrées, mais une seule sortie qui est la variable portant le nom du bloc.

Ainsi, chaque flèche entrant dans un bloc correspond à une entrée et plusieurs flèches sortant d'un même bloc correspondent à la même sortie.

Chaque bloc est constitué de deux ou trois informations comportant le nom de la variable calculée (sortie); la description succincte de l'opération; et éventuellement la méthode sous forme de références aux équations impliquées.

Par ailleurs, les formes des blocs permettent de distinguer plus facilement les entrées (blocs en forme de trapèze), les traitements (blocs en forme de rectangle), et les sélecteurs (blocs en forme de rectangle à angles arrondis).

Les pointillés représentent un cheminement optionnel, alternatif à un autre, le choix étant alors représenté par un bloc de type sélecteur.

En outre, les blocs sont regroupés selon les différentes phases de l'algorithme. Ainsi, la phase de configuration géométrique est référencée par P1, la phase de formalisation de la redondance est référencée par P2, la phase de mesure est référencée par P3, la phase de détection-localisation est référencée par P4, et la phase de reconstitution est référencée par P5.

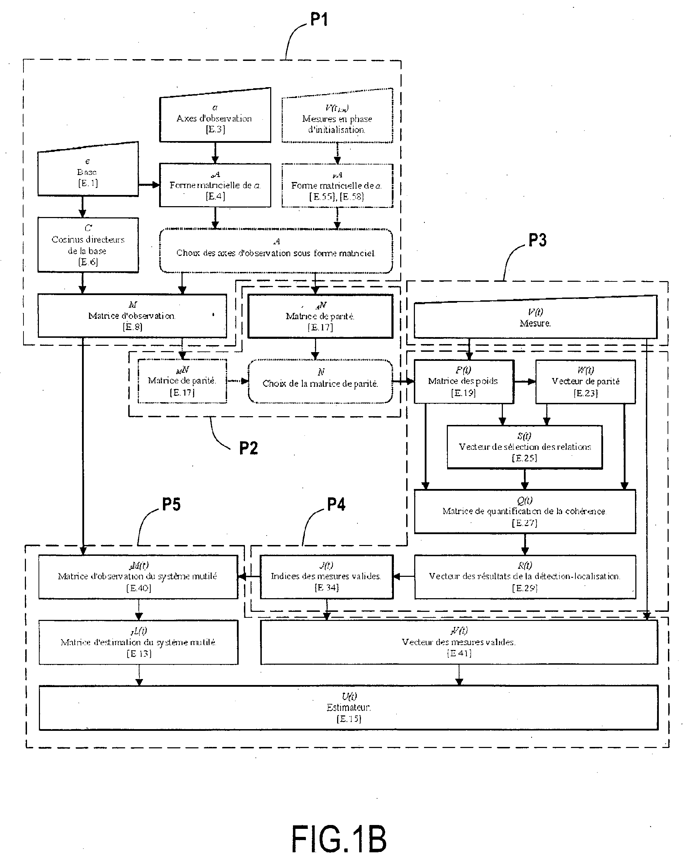

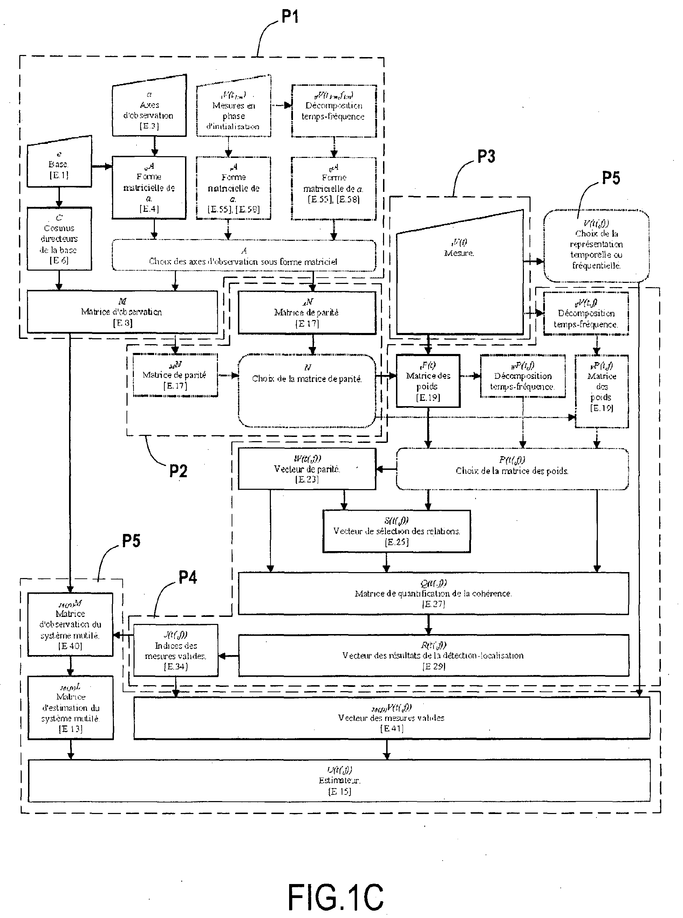

Plus particulièrement, la figure 1A décrit un logigramme ou organigramme de base. La figure 1B décrit un logigramme temporel appliquant le logigramme de base à chaque instant. Finalement, la figure 1C décrit un logigramme généralisé en temps-fréquence.

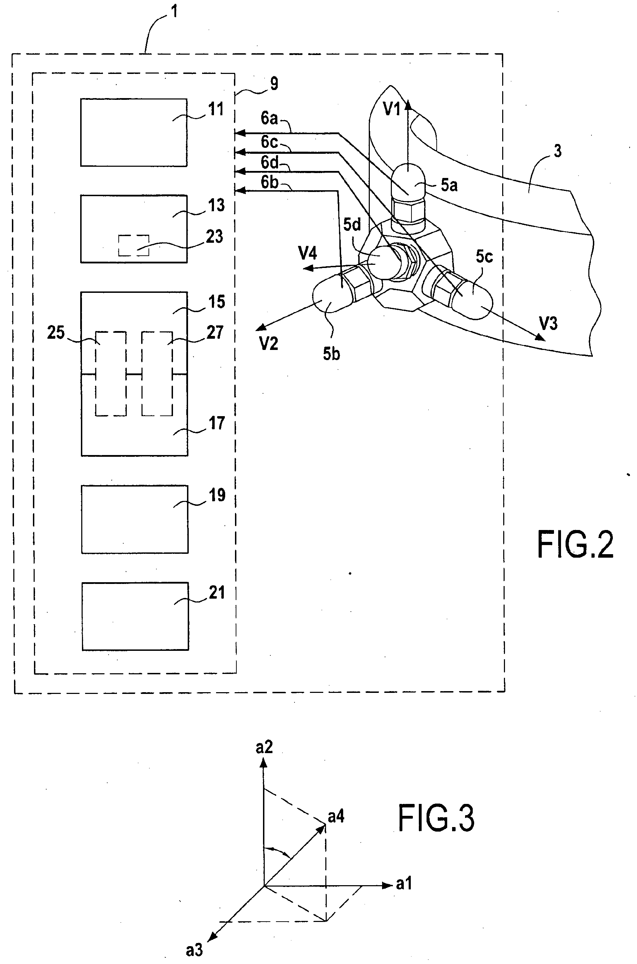

Les figures 2 à 5 décrivent des modes de réalisation particuliers d'un dispositif de validation de mesures d'une grandeur physique selon l'invention.

Plus particulièrement, la figure 2 décrit de manière schématique un dispositif 1 de validation de mesures d'une grandeur cinématique $x$ émanant d'un objet 3. La figure 2 est également une illustration des principales étapes de la méthode de validation de mesures selon l'invention.

A titre d'exemple, la grandeur cinématique $x$ mesurée peut correspondre à une grandeur de vibration. Par ailleurs, l'objet 3 qui est la source de la grandeur cinématique peut être une machine tournante (par exemple, une turbine), un moteur à piston ou un tout autre type de machine.

On dispose sur l'objet 3 (par exemple, le carter d'une turbine) trois capteurs principaux 5a, 5b et 5c pour mesurer des composantes $V_j$ de la grandeur cinématique $x$ selon trois axes concourants principaux qui forment une base $\{a_1\ a_2\ a_3\}$.

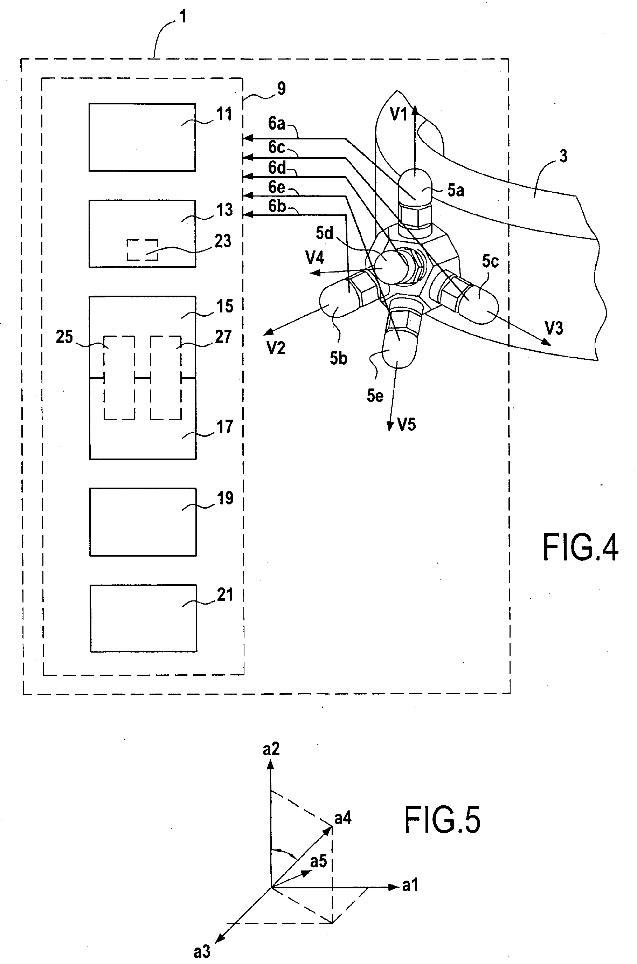

En outre, le dispositif comporte un capteur supplémentaire 5d qui est destiné à mesurer une composante supplémentaire $V_4$ de la grandeur cinématique. Ce capteur supplémentaire 5d est disposé sur l'objet selon un axe supplémentaire $a_4$ concourant aux trois axes principaux et non contenu dans l'un quelconque des plans définis par tout couple de deux axes choisis parmi ces trois axes principaux. Bien entendu, le dispositif 1 de validation peut comporter plusieurs capteurs supplémentaires disposés sur plusieurs axes supplémentaires (par exemple, la figure 4 montre un dispositif comportant deux capteurs supplémentaires 5d et 5e disposés sur l'objet selon deux axes supplémentaires). Les axes principaux et supplémentaires forment des axes d'observation et les capteurs principaux et supplémentaires forment des capteurs d'observation.

La figure 3 montre un exemple de la disposition géométrique des capteurs d'observation. Cette configuration comporte un premier axe $a_1$, un deuxième axe $a_2$ et un troisième axe $a_3$ concourants formant un trièdre orthogonal direct. L'axe supplémentaire $a_4$ forme un angle de 45° par rapport au deuxième axe $a_2$ et les directions des première et troisième axes $a_1$ et $a_3$ sont symétriques par rapport au deuxième axe $a_2$.

On en déduit que les angles entre $V_1$ et $V_4$ d'une part, entre $V_3$ et $V_4$ d'autre part, sont identiques et valent 60°. Ceci peut s'établir en considérant les vecteurs unitaires $a_i$ et les projections orthogonales de l'axe supplémentaire $a_4$ sur les trois autres axes:

Les coordonnées de l'axe supplémentaire $a_4$ dans la base orthonormée $\{a_1\ a_2\ a_3\}$ sont donc:

$$A_4 = \begin{bmatrix} 1/2 \\ 1/\sqrt{2} \\ 1/2 \end{bmatrix}$$

D'où l'angle:

$$\mathrm{acos}\left(\langle a_1, a_4 \rangle\right) = \mathrm{acos}\left(\langle a_2, a_4 \rangle\right) = \mathrm{acos}(1/2) = 60° .$$

On notera qu'il est assez simple d'un point de vue mécanique de réaliser des angles remarquables (par exemple, 90°, 60° ou 45°) entre les axes.

En variante, toujours dans le cas d'un trièdre orthogonal direct, l'axe supplémentaire $a_4$ peut occuper une position symétrique par rapport aux trois axes principaux :

$$A_4 = \begin{bmatrix} 1/\sqrt{3} \\ 1/\sqrt{3} \\ 1/\sqrt{3} \end{bmatrix}$$

Dans ce cas, les angles entre les axes sont alors:

$$\mathrm{acos}\left(\langle a_1, a_4 \rangle\right) = \mathrm{acos}\left(\langle a_2, a_4 \rangle\right) = \mathrm{acos}\left(\langle a_3, a_4 \rangle\right) = \mathrm{acos}\left(1/\sqrt{3}\right) \approx 54.7°$$

Cette disposition est plus optimale que la précédente mais peut être plus délicate à réaliser.

Encore une autre variante peut concerner une configuration de quatre axes correspondant à une isométrie totale entre les axes, conduisant à des axes positionnés à 120° les uns par rapport aux autres.

En outre, le dispositif 1 de validation peut comporter des moyens d'initialisation 11 pour repérer avec une précision déterminée l'axe supplémentaire $a_4$ (ou les axes supplémentaires) par rapport aux axes principaux $\{a_1 \, a_2 \, a_3\}$.

En effet, la méthode décrite précédemment peut être appliquée sur ce cas particulier où l'espace physique E est réduit à l'espace géométrique à trois dimensions $\{a_1 \, a_2 \, a_3\}$; où l'espace E est couvert par trois mesures (composantes principales) $V_1$, $V_2$, $V_3$ ($p=3$); et où il existe au moins une mesure redondante (composante supplémentaire) $V_4$, ($q \geq 4$).

Ainsi, les moyens d'initialisation 11 utilisent la méthode décrite précédemment concernant le repérage de l'espace. D'abord on utilise la configuration géométrique, puis on considère que l'axe redondant (défini par $a_4$) n'est pas connu et ensuite on applique la phase de formalisation de la redondance.

Par ailleurs, on notera que les capteurs principaux 5a à 5c correspondent à des accéléromètres mesurant des composantes axiale, radiale et tangentielle de la grandeur cinématique. Le capteur supplémentaire 5d correspond aussi à un accéléromètre de redondance. Les quatre capteurs 5a à 5d forment ainsi quatre canaux 6a à 6d (ou quatre chaînes de mesures) reliés à des moyens 9 de traitement de données.

Les quatre capteurs 5a à 5d et chaînes de mesure peuvent être identiques. A titre d'exemple, les capteurs 5a à 5d sont des accéléromètres, de bande passante 30 kHz et d'étendue de mesure $\pm$ 1500 g, chaque canal étant acquis à une cadence de 10240 pts/sec.

En outre, le dispositif 1 de validation comporte des moyens de détermination 13 et des moyens de validation 15.

Les moyens de détermination 13 sont destinés à déterminer un estimateur $U$ représentatif de la grandeur cinématique à partir des composantes délivrées par les capteurs d'observation 5a à 5d.

Finalement, les moyens de validation 15 sont destinés à valider la détermination de l'estimateur $U$ représentatif de la grandeur cinématique.

Par ailleurs, le dispositif 1 de validation comporte des moyens de détection d'erreur 17, des moyens de localisation 19 et des moyens de reconstitution 21.

Les moyens de détection d'erreur 17 sont adaptés pour détecter une erreur de mesure associée à la détermination de l'estimateur $U$ représentatif de la grandeur cinématique.

Les moyens de localisation 19 sont adaptés pour localiser des composantes valides de la grandeur cinématique qui ne sont pas génératrices de l'erreur de mesure.

Les moyens de reconstitution 21 sont adaptés pour reconstituer un nouvel estimateur $U$ représentatif de la grandeur cinématique à partir des composantes valides délivrées par les capteurs d'observation 5a à 5d.

On notera que le nombre de pannes détectables est égal à $q$-$p$ et que le nombre de pannes localisables est égal à $q$-$p$-$1$. Si on définit un seul axe supplémentaire $a_4$, on peut détecter une panne mais on ne peut pas la localiser. Ainsi, pour pouvoir localiser la panne, on utilise au moins deux axes supplémentaires.

Plus particulièrement, les moyens de détermination 13 de l'estimateur $U$ représentatif de la grandeur cinématique comportent des premiers moyens de calcul 23.

Ces premiers moyens de calcul 23 sont adaptés pour calculer une matrice d'observation $M$ (voir relations E8 ; E38) synthétisant la configuration géométrique des axes d'observation.

Les premiers moyens de calcul 23 sont aussi adaptés pour calculer une matrice d'estimation $L$ (voir relation E13) à partir de la matrice d'observation $M$.

En outre, les premiers moyens de calcul 23 sont adaptés pour calculer l'estimateur $U$ (voir relation E15) représentatif de la grandeur cinématique en fonction de la matrice d'estimation $L$ et des composantes $V$ mesurées par les capteurs d'observation 5a à 5d.

Par ailleurs, les moyens de validation 15 ou moyens de détection d'erreur 17 comportent des deuxièmes moyens de calcul 25.

Ces deuxièmes moyens de calcul 25 sont adaptés pour calculer une matrice de parité $N$ à partir de la matrice d'observation $M$ (voir relation E17).

Les deuxièmes moyens de calcul 25 sont adaptés aussi pour calculer un vecteur de parité $W$ (E22) associé à la matrice de parité $N$ et aux composantes $V_j$ de la grandeur cinématique mesurées par les capteurs d'observation 5a à 5d permettant de vérifier la validité de l'estimateur $U$ représentatif de la grandeur cinématique ou de détecter une erreur de mesure associée à cette détermination de l'estimateur $U$.

Par ailleurs, les moyens de validation 15 et/ou moyens de détection d'erreur 17 comportent en outre des troisièmes moyens de calcul 27.

Ces troisièmes moyens de calcul 27 sont adaptés pour calculer une matrice des poids $P$ (voir relation E19) à partir de la matrice de parité $N$ *et* des composantes $V_j$ de la grandeur cinématique.

Les troisièmes moyens de calcul 27 sont adaptés aussi pour calculer un vecteur de sélection $S$ (voir relation E25) à partir de la matrice des poids $P$ et du vecteur de parité $W$ permettant de discriminer des relations significatives de cohérence ou d'incohérence entre les composantes $V_j$ de la grandeur cinématique.

Les troisièmes moyens de calcul 27 sont également adaptés pour calculer une matrice de quantification de cohérence $Q$ (voir relation E27) permettant de quantifier les niveaux de validité des composantes $V_j$ de la grandeur

cinématique.

Les troisièmes moyens de calcul 27 sont adaptés aussi pour déduire un vecteur de confiance $R$ à partir de la matrice de quantification de cohérence $Q$ permettant de donner le niveau de confiance de chaque composante $V_j$ de la grandeur cinématique mesurée par chacun des capteurs d'observation 5a à 5d (voir relation E29).

Finalement, les troisièmes moyens de calcul 27 sont adaptés pour déduire une liste des composantes $V_j$ valides de la grandeur cinématique (voir relation E33).

On notera que tous les premiers, deuxièmes et troisièmes moyens de calcul 23, 25 et 27 peuvent constituer des mêmes moyens de calcul. Plus généralement tous les moyens d'initialisation 11, de détermination 13, de validation 15, de détection d'erreur 17, de localisation 19 et de reconstitution 21 peuvent être compris dans les moyens de traitement 9 de données implémentés par un calculateur ou un microprocesseur.

Les figure.4 montre un dispositif qui se distingue de celui de la figure 2 uniquement par le fait qu'il comporte deux capteurs supplémentaires 5d et 5e qui sont destinés à mesurer deux composantes supplémentaires $V_4$ et $V_5$ de la grandeur cinématique. Dans ce cas, les cinq capteurs 5a à 5e forment cinq canaux 6a à 6d reliés aux moyens 9 de traitement de données.

De plus, la figure 5 montre que les capteurs supplémentaires 5d et 5e sont disposés sur l'objet selon deux axes supplémentaires $a_4, a_5$ (bien entendu, concourant aux trois axes principaux et non contenus dans l'un quelconque des plans définis par tout couple de deux axes choisis parmi ces trois axes principaux).

L'invention vise aussi un programme d'ordinateur téléchargeable depuis un réseau de communication (ou stocké sur un support lisible par ordinateur) comprenant des instructions de codes de programme pour l'exécution des étapes de la méthode de validation selon l'invention lorsqu'il est exécuté sur un ordinateur.

Le programme d'ordinateur permet de couvrir les diverses phases du calcul des grandeurs caractéristiques d'un système de parité, et de les exploiter pour la détection, la localisation et la reconstruction de mesures en défaut.

Aucune hypothèse n'est faite sur le système de mesures redondantes. Le programme d'ordinateur traite indifféremment un espace à $p$ dimensions couvert par $q$ mesures.

De plus, ce programme peut se présenter sous une forme de fonctions génériques, où les arguments d'entrée et de sortie sont clairement identifiés, permettant une exploitation modulaire, gage de souplesse d'utilisation, donc d'applicabilité à tout type de dispositif de validation de mesures.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Ainsi, la présente invention permet de rechercher automatiquement la configuration géométrique des capteurs, par calcul de relations de liaison entre les mesures, pendant une phase préliminaire non perturbée de recalage. Elle permet de détecter des défauts de mesure grâce à la bonne détectabilité du vecteur de parité. Elle permet de localiser les défauts (identification des mesures en défaut) grâce à une stratégie basée sur la construction de la matrice de parité. Elle permet aussi de reconstruire des mesures en défaut en exploitant la redondance des axes de mesures.

**Revendications**

1. Dispositif de validation de mesures d'une grandeur cinématique $x$ émanant d'un objet (3) sur lequel sont disposés, selon trois axes principaux ($a_1$, $a_2$, $a_3$) concourants formant une base $e = \{e_1\ e_2\ ...\ e_p\}$ d'un espace physique à $p=3$ dimensions, des capteurs principaux (5a, 5b, 5c) pour mesurer des composantes $V_j$ ($V_1$, $V_2$, $V_3$) de ladite grandeur cinématique $x$, **caractérisé en ce qu'**il comporte :

   - au moins deux capteurs supplémentaires (5d, 5e) pour mesurer au moins deux composantes supplémentaires ($V_4$, $V_5$) de ladite grandeur cinématique, lesdits au moins deux capteurs supplémentaires (5d, 5e) étant disposés sur ledit objet (3) selon au moins deux axes supplémentaires ($a_4$, $a_5$) concourant auxdits trois axes principaux ($a_1$, $a_2$, $a_3$), et non contenus dans l'un quelconque des plans définis par tout couple de deux axes choisis parmi lesdits trois axes principaux ($a_1$, $a_2$, $a_3$), lesdits axes principaux et supplémentaires formant un ensemble $a = \{a_1, a_2, a_3, ... a_q\}$ de $q$ axes d'observation ($a_1$, $a_2$, $a_3$, $a_4$, $a_5$), et lesdits capteurs principaux et supplémentaires formant des capteurs (5a, 5b, 5c, 5d, 5e) d'observation ;
   - des moyens de détermination (13) pour déterminer un estimateur $U$ représentatif de ladite grandeur cinématique à partir desdites composantes $V_j j \in 1 : q$ ($V_1$, $V_2$, $V_3$, $V_4$, $V_5$) délivrées par lesdits capteurs d'observation (5a, 5b, 5c, 5d, 5e), les moyens de détermination (13) de l'estimateur $U$ représentatif de la grandeur cinématique comportant :
   - des premiers moyens de calcul (23) pour calculer une matrice d'observation $M$ synthétisant la configuration géométrique desdits axes d'observation, la matrice d'observation $M$ de dimension $pxq$ étant définie par $M=C.A$, $C$ étant la matrice des cosinus directeurs de la base $e$ et $A$ étant la composante matricielle de l'ensemble $a$ de $q$ axes ;

- des premiers moyens de calcul (23) pour calculer une matrice d'estimation $L$ à partir de ladite matrice d'observation $M$ vérifiant $L.^{T}M = I_p$; et
- des premiers moyens de calcul (23) pour calculer ledit estimateur $U$ représentatif de la grandeur cinématique en fonction de ladite matrice d'estimation $L$ et desdites composantes $V_j$ mesurées par lesdits capteurs d'observation,
- des moyens de validation (15) pour valider ladite détermination de l'estimateur $U$ représentatif de la grandeur cinématique ;
- des moyens de détection d'erreur (17) pour détecter une erreur de mesure associée à ladite détermination de l'estimateur $U$ représentatif de la grandeur cinématique, les moyens de validation (15) et/ou moyens de détection d'erreur (17) comportant :
- des deuxièmes moyens de calcul (25) pour calculer une matrice de parité $N$ à partir de ladite matrice d'observation $M$, la matrice de parité $N$ étant définie par $N.^{T} M = 0$ ; et
- des deuxièmes moyens de calcul (25) pour calculer un vecteur de parité $W$ associé à ladite matrice de parité $Net$ aux dites composantes $V_j$ ($V_1$, $V_2$, $V_3$, $V_4$, $V_5$) de la grandeur cinématique mesurées par les capteurs d'observation permettant de vérifier la validité de l'estimateur $U$ représentatif de la grandeur cinématique ou de détecter une erreur de mesure associée à ladite détermination de l'estimateur $U$, le vecteur de parité $W$ étant défini par $W=N.Z$ où $Z$ est une représentation matricielle de l'erreur de mesure,
- des moyens de localisation (19) pour localiser des composantes valides de ladite grandeur cinématique n'engendrant pas ladite erreur de mesure ; et
- des moyens de reconstitution (21) pour reconstituer un nouvel estimateur $U$ représentatif de ladite grandeur cinématique à partir desdites composantes valides délivrées par lesdits capteurs d'observation (5a, 5b, 5c, 5d).

2. Dispositif selon la revendication 1, **caractérisé en ce que** les moyens de validation (15) et/ou moyens de détection d'erreur (17) comportent en outre :

- des troisièmes moyens de calcul (27) pour calculer une matrice des poids $P$ à partir de ladite matrice de parité $Net$ desdites composantes $V_j$ ($V_1$, $V_2$, $V_3$, $V_4$, $V_5$) de la grandeur cinématique, la matrice des poids $P$ étant égale à N.diag(V),
- des troisièmes moyens de calcul (27) pour calculer un vecteur de sélection $S$ à partir de ladite matrice des *poids P* et dudit vecteur de parité $W$ permettant de discriminer des relations significatives de cohérence ou d'incohérence entre lesdites composantes $V_j$ ($V_1$, $V_2$, $V_3$, $V_4$, $V_5$) de la grandeur cinématique,
- des troisièmes moyens de calcul (27) pour calculer une matrice de quantification de cohérence $Q$ permettant de quantifier les niveaux de validité desdites composantes $V_j$ de la grandeur cinématique,
- des troisièmes moyens de calcul (27) pour déduire un vecteur de confiance R à partir de la matrice de quantification de cohérence $Q$ permettant de donner le niveau de confiance de chaque composante de la grandeur cinématique mesurée par chacun des capteurs d'observation, et
- des troisièmes moyens de calcul (27) pour déduire une liste desdites composantes valides de ladite grandeur cinématique.

3. Dispositif selon l'une quelconque des revendications 1 et 2, **caractérisé en ce qu'**il comporte des moyens d'initialisation (11) pour repérer avec une précision déterminée lesdits axes supplémentaires ($a_4$, $a_5$) par rapport aux axes principaux ($a_1$, $a_2$, $a_3$).

4. Dispositif selon l'une quelconque des revendications 1 à 3, **caractérisé en ce que** les axes principaux comportent un premier axe ($a_1$), un deuxième axe ($a_2$) et un troisième axe ($a_3$) formant un trièdre orthogonal direct, et **en ce qu'** au moins un axe supplémentaire ($a_4$) forme un angle de 45° par rapport au deuxième axe ($a_2$) et que les directions des premier et troisième axes ($a_1$, $a_3$) sont symétriques par rapport au deuxième axe ($a_2$).

5. Dispositif selon l'une quelconque des revendications 1 à 3, **caractérisé en ce que** les trois axes principaux ($a_1$, $a_2$, $a_3$) forment un trièdre orthogonal direct, et **en ce qu'**au moins un axe supplémentaire ($a_4$) occupe une position symétrique par rapport aux trois axes principaux.

6. Dispositif selon l'une quelconque des revendications 1 à 5, **caractérisé en ce que** les capteurs principaux (5a, 5b, 5c) correspondent à des accéléromètres mesurant des composantes axiale, radiale et tangentielle de la grandeur cinématique et **en ce que** lesdits capteurs supplémentaires (5d, 5e) correspondent à des accéléromètres de redondance.

7. Dispositif selon l'une quelconque des revendications 1 à 6, **caractérisé en ce que** la grandeur cinématique correspond à une grandeur de vibration.

8. Dispositif selon l'une quelconque des revendications 1 à 7, **caractérisé en ce que** ledit objet (3) source de la grandeur cinématique est une machine tournante.

9. Méthode de validation de mesures d'une grandeur cinématique x émanant d'un objet (3) sur lequel sont disposés, selon trois axes principaux ($a_1$, $a_2$, $a_3$) concourants formant une base e=\{$e_1$ $e_2$ ... $e_p$\} d'un espace physique à p=3 dimensions, des capteurs principaux (5a, 5b, 5c) pour mesurer des composantes $V_j$ ($V_1$, $V_2$, $V_3$) de ladite grandeur cinématique *x*, **caractérisée en ce qu'**elle comporte les étapes suivantes :

- mesurer au moins deux composantes supplémentaires ($V_4$, $V_5$) de ladite grandeur cinématique au moyen d'au moins deux capteurs supplémentaires disposés sur ledit objet (3) selon au moins deux axes supplémentaires ($a_4$, $a_5$) concourant auxdits trois axes principaux ($a_1$, $a_2$, $a_3$), et non contenus dans l'un quelconque des plans définis par tout couple de deux axes choisis parmi lesdits trois axes principaux ($a_1$, $a_2$, $a_3$), lesdits axes principaux et supplémentaires formant un ensemble $a$=\{$a_1$, $a_2$, $a_3$, ... $a_q$\} de $q$ axes d'observation ($a_1$, $a_2$, $a_3$, $a_4$, $a_5$), et lesdits capteurs principaux et supplémentaires formant des capteurs d'observation (5a, 5b, 5c, 5d, 5e) ;
- déterminer un estimateur *U* représentatif de ladite grandeur cinématique à partir desdites composantes $V_j$ ($V_1$, $V_2$, $V_3$, $V_4$, $V_5$) délivrées par lesdits capteurs (5a, 5b, 5c, 5d, 5e) d'observation ;
- valider ladite détermination de l'estimateur *U* représentatif de la grandeur cinématique ;
- détecter une erreur de mesure associée à ladite détermination de l'estimateur *U* représentatif de la grandeur cinématique,
- localiser des composantes valides de ladite grandeur cinématique n'engendrant pas ladite erreur de mesure ; et
- reconstituer un nouvel estimateur *U* représentatif de ladite grandeur cinématique à partir desdites composantes valides délivrées par lesdits capteurs d'observation (5a, 5b, 5c, 5d, 5e),

**en ce que** la détermination de l'estimateur *U* représentatif de la grandeur cinématique comporte les étapes suivantes:

- calculer une matrice d'observation *M* synthétisant la configuration géométrique desdits axes d'observation, la matrice d'observation *M* de dimension *pxq* étant définie par *M=C.A, C* étant la matrice des cosinus directeurs de la base *e* et *A* étant la composante matricielle de l'ensemble *a de q axes ;*
- calculer une matrice d'estimation *L* à partir de ladite matrice d'observation *M* vérifiant $L.^{T}M$ = $I_p$; et
- calculer ledit estimateur *U* représentatif de la grandeur cinématique en fonction de ladite matrice d'estimation *L* et desdites composantes $V_j$ mesurées par lesdits capteurs d'observation ; et

**en ce que** les étapes de validation et/ou de détection d'erreur comportent les étapes suivantes:

- calculer une matrice de parité *N* à partir de ladite matrice d'observation *M,* la matrice de parité *N* étant définie par $N.^{T}M$ = 0, et
- calculer un vecteur de parité *W* associé à ladite matrice de parité *N* et auxdites composantes $V_j$ ($V_1$, $V_2$, $V_3$, $V_4$, $V_5$) de la grandeur cinématique mesurées par les capteurs d'observation permettant de vérifier la validité de l'estimateur *U* représentatif de la grandeur cinématique ou de détecter une erreur de mesure associée à ladite détermination de l'estimateur *U*, le vecteur de parité *W* étant défini par W=N.Z où Z est une représentation matricielle de l'erreur de mesure.

10. Méthode selon la revendication 9, **caractérisée en ce que** les étapes de validation et/ou de détection d'erreur comportent en outre les étapes suivantes:

- calculer une matrice des poids *P* à partir de ladite matrice de parité *N* et desdites composantes $V_j$ ($V_1$, $V_2$, $V_3$, $V_4$, $V_5$) de la grandeur cinématique, la matrice des poids *P* étant égale à N.diag(V),
- calculer un vecteur de sélection *S* à partir de ladite matrice des poids *P* et dudit vecteur de parité *W* permettant de discriminer des relations significatives de cohérence ou d'incohérence entre lesdites composantes $V_j$ ($V_1$, $V_2$, $V_3$, $V_4$, $V_5$) de la grandeur cinématique,
- calculer une matrice de quantification de cohérence *Q* permettant de quantifier les niveaux de validité desdites composantes $V_j$ ($V_1$, $V_2$, $V_3$, $V_4$, $V_5$) de la grandeur cinématique,
- déduire un vecteur de confiance *R* à partir de la matrice de quantification de cohérence *Q* permettant de donner le niveau de confiance de chaque composante de la grandeur cinématique mesurée par chacun des capteurs d'observation, et

- déduire une liste desdites composantes valides de ladite grandeur cinématique.

**11.** Méthode selon l'une quelconque des revendications 9 et 10, **caractérisée en ce qu'**elle comporte une étape d'initialisation pour repérer avec une précision déterminée lesdits axes supplémentaires ($a_4$, $a_5$) par rapport aux axes principaux ($a_1$, $a_2$, $a_3$).

**12.** Méthode selon l'une quelconque des revendications 9 à 11, **caractérisée en ce que** la grandeur cinématique correspond à une grandeur de vibration.

**13.** Programme d'ordinateur téléchargeable depuis un réseau de communication et/ou stocké sur un support lisible par ordinateur et/ou exécutable par un microprocesseur, **caractérisé en ce qu'**il comprend des instructions de codes de programme pour l'exécution des étapes de la méthode de validation selon au moins l'une quelconque des revendications 9 à 12, lorsqu'il est exécuté sur un ordinateur.

**Patentansprüche**

**1.** Vorrichtung zur Validierung von Messungen einer kinematischen Größe $x$, die von einem Objekt (3) ausgeht, an dem entlang von drei in einem Punkt zusammenlaufenden Hauptachsen ($a_1$, $a_2$, $a_3$), die eine Basis e = $\{e_1 \; e_2 \; ...e_p\}$ eines physikalischen Raums mit p = 3 Dimensionen bilden, Hauptsensoren (5a, 5b, 5c) angeordnet sind, um Komponenten $V_j$ ($V_1$, $V_2$, $V_3$) der kinematischen Größe $x$ zu messen, **dadurch gekennzeichnet, dass** sie umfasst:

- wenigstens zwei zusätzliche Sensoren (5d, 5e), um wenigstens zwei zusätzliche Komponenten ($V_4$, $V_5$) der kinematischen Größe zu messen, wobei die wenigstens zwei zusätzlichen Sensoren (5d, 5e) an dem Objekt (3) entlang von wenigstens zwei zusätzlichen Achsen ($a_4$, $a_5$) angeordnet sind, die an den drei Hauptachsen ($a_1$, $a_2$, $a_3$) zusammenlaufen und nicht in irgendeiner der Ebenen, welche durch jedes Paar aus zwei aus den drei Hauptachsen ($a_1$, $a_2$, $a_3$) ausgewählten Achsen definiert sind, enthalten sind, wobei die Hauptachsen und die zusätzlichen Achsen eine Menge a = $\{a_1, a_2, a_3, ... a_q\}$ von $q$ Beobachtungsachsen ($a_1$, $a_2$, $a_3$, $a_4$, $a_5$) bilden und wobei die Hauptsensoren und die zusätzlichen Sensoren Beobachtungssensoren (5a, 5b, 5c, 5d, 5e) bilden,
- Bestimmungsmittel (13), um eine Schätzfunktion $U$, die für die kinematische Größe repräsentativ ist, anhand der durch die Beobachtungssensoren (5a, 5b, 5c, 5d, 5e) gelieferten Komponenten $V_j$ $j \in 1 : q$ ($V_1$, $V_2$, $V_3$, $V_4$, $V_5$) zu bestimmen, wobei die Mittel zur Bestimmung (13) der für die kinematische Größe repräsentativen Schätzfunktion $U$ umfassen:
- erste Berechnungsmittel (23), um eine Beobachtungsmatrix $M$, welche die geometrische Konfiguration der Beobachtungsachsen synthetisiert, zu berechnen, wobei die Beobachtungsmatrix $M$ der Dimension $pxq$ durch $M = C.A$ definiert ist, wobei $C$ die Matrix der Richtungskosinusse der Basis e ist und wobei $A$ die Matrixkomponente der Menge $a$ von $q$ Achsen ist,
- erste Berechnungsmittel (23), um eine Schätzmatrix $L$ aus der Beobachtungsmatrix $M$ zu berechnen, die $L.^T M = Ip$ erfüllt, und
- erste Berechnungsmittel (23), um die für die kinematische Größe repräsentative Schätzfunktion $U$ in Abhängigkeit von der Schätzmatrix $L$ und von den durch die Beobachtungssensoren gemessenen Komponenten $V_j$ zu berechnen,
- Validierungsmittel (15), um die Bestimmung der für die kinematische Größe repräsentativen Schätzfunktion $U$ zu validieren,
- Fehlererkennungsmittel (17) zur Erfassung eines Messfehlers, welcher der Bestimmung der für die kinematische Größe repräsentativen Schätzfunktion $U$ zugeordnet ist, wobei die Validierungsmittel (15) und/oder Fehlererkennungsmittel (17) umfassen:
- zweite Berechnungsmittel (25) zur Berechnung einer Paritätsmatrix $N$ aus der Beobachtungsmatrix $M$, wobei die Paritätsmatrix $N$ durch $N.^T M = 0$ definiert ist, und
- zweite Berechnungsmittel (25) zur Berechnung eines Paritätsvektors $W$, welcher der Paritätsmatrix $N$ und den durch die Beobachtungssensoren gemessenen Komponenten $V_j$ ($V_1$, $V_2$, $V_3$, $V_4$, $V_5$) der kinematischen Größe zugeordnet ist, der ermöglicht, die Validität der für die kinematische Größe repräsentativen Schätzfunktion $U$ zu bestätigen oder einen Messfehler, welcher der Bestimmung der Schätzfunktion $U$ zugeordnet ist, zu erfassen, wobei der Paritätsvektor $W$ durch $W = N.Z$ definiert ist, wobei $Z$ eine Matrixdarstellung des Messfehlers ist,
- Lokalisierungsmittel (19) zur Lokalisierung von gültigen Komponenten der kinematischen Größe, die nicht den Messfehler verursachen, und

- Rekonstruktionsmittel (21) zur Wiederherstellung einer neuen Schätzfunktion *U*, die für die kinematische Größe repräsentativ ist, anhand der durch die Beobachtungssensoren (5a, 5b, 5c, 5d) gelieferten gültigen Komponenten.

2. Vorrichtung nach Anspruch 1, **dadurch gekennzeichnet, dass** die Validierungsmittel (15) und/oder Fehlererkennungsmittel (17) ferner umfassen:

- dritte Berechnungsmittel (27) zur Berechnung einer Matrix der Gewichte *P* aus der Paritätsmatrix *N* und den Komponenten $V_j (V_1, V_2, V_3, V_4, V_5)$ der kinematischen Größe, wobei die Matrix der Gewichte *P* gleich N.diag(V) ist,
- dritte Berechnungsmittel (27) zur Berechnung eine Selektionsvektors S anhand der Matrix der Gewichte *P* und des Paritätsvektors W, der ermöglicht, signifikante Kohärenz- oder Inkohärenz-Beziehungen zwischen den Komponenten $V_j (V_1, V_2, V_3, V_4, V_5)$ der kinematischen Größe zu unterscheiden,
- dritte Berechnungsmittel (27) zur Berechnung einer Kohärenzquantifizierungsmatrix *Q,* die ermöglicht, die Validitätsniveaus der Komponenten $V_j$ der kinematischen Größe zu quantifizieren,
- dritte Berechnungsmittel (27) zum Ableiten eines Zuverlässigkeitsvektors *R* aus der Kohärenzquantifizierungsmatrix *Q,* der ermöglicht, das Konfidenzniveau einer jeden durch jeden der Beobachtungssensoren gemessenen Komponente der kinematischen Größe anzugeben, und
- dritte Berechnungsmittel (27) zum Ableiten einer Liste der gültigen Komponenten der kinematischen Größe.

3. Vorrichtung nach einem der Ansprüche 1 und 2, **dadurch gekennzeichnet, dass** sie Initialisierungsmittel (11) umfasst, um mit einer bestimmten Genauigkeit die zusätzlichen Achsen $(a_4, a_5)$ in Bezug auf die Hauptachsen $(a_1, a_2, a_3)$ zu lokalisieren.

4. Vorrichtung nach einem der Ansprüche 1 bis 3, **dadurch gekennzeichnet, dass** die Hauptachsen eine erste Achse $(a_1)$, eine zweite Achse $(a_2)$ und eine dritte Achse $(a_3)$, die ein orthogonales Rechtssystem bilden, umfasst, und dass wenigstens eine zusätzliche Achse $(a_4)$ einen Winkel von 45° gegenüber der zweiten Achse $(a_2)$ bildet und dass die Richtungen der ersten und der dritten Achse $(a_1, a_3)$ zu der zweiten Achse $(a_2)$ symmetrisch sind.

5. Vorrichtung nach einem der Ansprüche 1 bis 3, **dadurch gekennzeichnet, dass** die drei Hauptachsen $(a_1, a_2, a_3)$ ein orthogonales Rechtssystem bilden und dass wenigstens eine zusätzliche Achse $(a_4)$ eine zu den drei Hauptachsen symmetrische Position einnimmt.

6. Vorrichtung nach einem der Ansprüche 1 bis 5, **dadurch gekennzeichnet, dass** die Hauptsensoren (5a, 5b, 5c) Beschleunigungsmessern, welche eine axiale, eine radiale und eine tangentiale Komponente der kinematischen Größe messen, entsprechen, und dass die zusätzlichen Sensoren (5d, 5e) Redundanzbeschleunigungsmessern entsprechen.

7. Vorrichtung nach einem der Ansprüche 1 bis 6, **dadurch gekennzeichnet, dass** die kinematische Größe einer Schwingungsgröße entspricht.

8. Vorrichtung nach einem der Ansprüche 1 bis 7, **dadurch gekennzeichnet, dass** das Objekt (3), welches Ursprung der kinematischen Größe ist, eine umlaufende Maschine ist.

9. Verfahren zur Validierung von Messungen einer kinematischen Größe x, die von einem Objekt (3) ausgeht, an dem entlang von drei in einem Punkt zusammenlaufenden Hauptachsen $(a_1, a_2, a_3)$, die eine Basis e = $\{e_1 \ e_2 \ ...e_p\}$ eines physikalischen Raums mit p = 3 Dimensionen bilden, Hauptsensoren (5a, 5b, 5c) angeordnet sind, um Komponenten $V_j (V_1, V_2, V_3)$ der kinematischen Größe x zu messen, **dadurch gekennzeichnet, dass** es die folgenden Schritte umfasst:

- Messen von wenigstens zwei zusätzlichen Komponenten $(V_4, V_5)$ der kinematischen Größe mittels wenigstens zweier zusätzlicher Sensoren, die an dem Objekt (3) entlang von wenigstens zwei zusätzlichen Achsen $(a_4, a_5)$ angeordnet sind, die an den drei Hauptachsen $(a_1, a_2, a_3)$ zusammenlaufen und nicht in irgendeiner der Ebenen, welche durch jedes Paar aus zwei aus den drei Hauptachsen $\{a_1, a_2, a_3\}$ ausgewählten Achsen definiert sind, enthalten sind, wobei die Hauptachsen und die zusätzlichen Achsen eine Menge a = $\{a_1, a_2, a_3, ... a_q\}$ von q Beobachtungsachsen $(a_1, a_2, a_3, a_4, a_5)$ bilden und wobei die Hauptsensoren und die zusätzlichen Sensoren Beobachtungssensoren (5a, 5b, 5c, 5d, 5e) bilden,
- Bestimmen einer Schätzfunktion *U,* die für die kinematische Größe repräsentativ ist, anhand der durch die Beobachtungssensoren (5a, 5b, 5c, 5d, 5e) gelieferten Komponenten $V_j$ ($V_1$, $V_2$, $V_3$, $V_4$, $V_5$),
- Validieren der Bestimmung der für die kinematische Größe repräsentativen Schätzfunktion $U$,
- Erfassen eines Messfehlers, welcher der Bestimmung der für die kinematische Größe repräsentativen Schätzfunktion $U$ zugeordnet ist,
- Lokalisieren von gültigen Komponenten der kinematischen Größe, die nicht den Messfehler verursachen, und
- Wiederherstellen einer neuen Schätzfunktion $U$, die für die kinematische Größe repräsentativ ist, anhand der durch die Beobachtungssensoren (5a, 5b, 5c, 5d, 5e) gelieferten gültigen Komponenten,

dass das Bestimmen der für die kinematische Größe repräsentativen Schätzfunktion $U$ die folgenden Schritte umfasst:

- Berechnen einer Beobachtungsmatrix $M$, welche die geometrische Konfiguration der Beobachtungsachsen synthetisiert, wobei die Beobachtungsmatrix $M$ der Dimension *pxq* durch $M = C.A$ definiert ist, wobei $C$ die Matrix der Richtungskosinusse der Basis e ist und wobei $A$ die Matrixkomponente der Menge a von $q$ Achsen ist,
- Berechnen einer Schätzmatrix $L$ aus der Beobachtungsmatrix $M$, die $L.^T M = I_p$ erfüllt, und
- Berechnen der für die kinematische Größe repräsentativen Schätzfunktion $U$ in Abhängigkeit von der Schätzmatrix $L$ und von den durch die Beobachtungssensoren gemessenen Komponenten $V_j$, und

dass die Validierungs- und/oder Fehlererkennungsschritte die folgenden Schritte umfassen

- Berechnen einer Paritätsmatrix $N$ aus der Beobachtungsmatrix $M$, wobei die Paritätsmatrix $N$ durch $N.^T M = 0$ definiert ist, und
- Berechnen eines Paritätsvektors $W$, welcher der Paritätsmatrix $N$ und den durch die Beobachtungssensoren gemessenen Komponenten $V_j$ ($V_1$, $V_2$, $V_3$, $V_4$, $V_5$) der kinematischen Größe zugeordnet ist, der ermöglicht, die Validität der für die kinematische Größe repräsentativen Schätzfunktion $U$ zu bestätigen oder einen Messfehler, welcher der Bestimmung der Schätzfunktion $U$ zugeordnet ist, zu erfassen, wobei der Paritätsvektor $W$ durch $W = N.Z$ definiert ist, wobei $Z$ *eine* Matrixdarstellung des Messfehlers ist.

10. Verfahren nach Anspruch 9, **dadurch gekennzeichnet, dass** die Validierungs- und/oder Fehlererkennungsschritte ferner die folgenden Schritte umfassen:

- Berechnen einer Matrix der Gewichte $P$ aus der Paritätsmatrix $N$ und den Komponenten $V_j$ ($V_1$, $V_2$, $V_3$, $V_4$, $V_5$) der kinematischen Größe, wobei die Matrix der Gewichte $P$ gleich N.diag(V) ist,
- Berechnen eines Selektionsvektors S anhand der Matrix der Gewichte $P$ und des Paritätsvektors W, der ermöglicht, signifikante Kohärenz- oder Inkohärenz-Beziehungen zwischen den Komponenten $V_j$ ($V_1$, $V_2$, $V_3$, $V_4$, $V_5$) der kinematischen Größe zu unterscheiden,
- Berechnen einer Kohärenzquantifizierungsmatrix Q, die ermöglicht, die Validitätsniveaus der Komponenten $V_j$ ($V_1$, $V_2$, $V_3$, $V_4$, $V_5$) der kinematischen Größe zu quantifizieren,
- Ableiten eines Zuverlässigkeitsvektors $R$ aus der Kohärenzquantifizierungsmatrix Q, der ermöglicht, das Konfidenzniveau einer jeden durch jeden der Beobachtungssensoren gemessenen Komponente der kinematischen Größe anzugeben, und
- Ableiten einer Liste der gültigen Komponenten der kinematischen Größe.

11. Verfahren nach einem der Ansprüche 9 und 10, **dadurch gekennzeichnet, dass** es einen Initialisierungsschritt umfasst, um mit einer bestimmten Genauigkeit die zusätzlichen Achsen ($a_4$, $a_5$) in Bezug auf die Hauptachsen ($a_1$, $a_2$, $a_3$) zu lokalisieren

12. Verfahren nach einem der Ansprüche 9 bis 11, **dadurch gekennzeichnet, dass** die kinematische Größe einer Schwingungsgröße entspricht.

13. Computerprogramm, das von einem Kommunikationsnetz herunterladbar und/oder auf einem computerlesbaren Träger gespeichert und/oder durch einen Mikroprozessor ausführbar ist, **dadurch gekennzeichnet, dass** es Programmcode-Anweisungen für die Durchführung der Schritte des Validierungsverfahrens nach wenigstens einem der Ansprüche 9 bis 12, wenn es auf einem Computer ausgeführt wird, umfasst.

**Claims**

1. A device for validating measurements of a dynamic magnitude $x$ coming from an article (3) having placed thereon main sensors (5a, 5b, 5c) for sensing along three concurrent main axes ($a_1$, $a_2$, $a_3$) forming a basis e=$\{e_1\ e_2\ ...\ e_p\}$ of a physical space having p=3 dimensions, the sensors serving to measure components $V_j$ ($V_1$, $V_2$, $V_3$) of said dynamic magnitude $x$, and the device being **characterized in that** it comprises:

· at least two additional sensors (5d, 5e) for measuring at least two additional components ($V_4$, $V_5$) of said dynamic magnitude, said at least two additional sensors (5d, 5e) being placed on said article (3) for sensing along at least two additional axes ($a_4$, $a_5$) that are concurrent with said three main axes ($a_1$, $a_2$, $a_3$) and that are not contained in any of the planes defined by any pair of said three main axes ($a_1$, $a_2$, $a_3$), said main and additional axes forming a set a=$\{a_1$, $a_2$, ..., $a_q\}$ of $q$ observation axes ($a_1$, $a_2$, $a_3$, $a_4$, $a_5$), and said main and additional sensors forming observation sensors (5a, 5b, 5c, 5d, 5e);
· determination means (13) for determining an estimator $U$ representative of said dynamic magnitude from said components $V_j$ $j \in$ 1:q ($V_1$, $V_2$, $V_3$, $V_4$, $V_5$) delivered by said observation sensors (5a, 5b, 5c, 5d, 5e), the determination means (13) for determining the estimator $U$ representative of the dynamic magnitude comprising:
· first calculation means (23) for calculating an observation matrix $M$ that synthesizes the geometrical configuration of said observation axes, the observation matrix $M$ of dimension $pxq$ being defined by $M=C.A$, $C$ being the matrix of the direction cosines of the basis $e$, and $A$ being the matrix component of the set a of $q$ axes;
· first calculation means (23) for calculating an estimation matrix $L$ from said observation matrix M satisfying $L.^{T}M = I_p$; and
· first calculation means (23) for calculating said estimator $U$ representative of the dynamic magnitude as a function of said estimation matrix $L$ of said components $V_j$ measured by said observation sensors;
· validation means (15) for validating said determination of the estimator $U$ representative of the dynamic magnitude;
· error detector means (17) for detecting a measurement error associated with said determination of the estimator $U$ representative of the dynamic magnitude, the validation means (15) and/or the error detector means (17) comprising:

· second calculation means (25) for calculating a parity matrix $N$ from said observation matrix $M$, the parity matrix $N$ being defined by $N.^{T}M = 0$; and
· second calculation means (25) for calculating a parity vector $W$ associated with said parity matrix $N$ and with said components $V_j$($V_1$, $V_2$, $V_3$, $V_4$, $V_5$) of the dynamic magnitude measured by the observation sensors, serving to verify the validity of the estimator $U$ representative of the dynamic magnitude, or to detect a measurement error associated with said determination of the estimator $U$, the parity vector $W$ being defined by $W=N.Z$ where $Z$ is a matrix representation of the measurement error;
· localization means (19) for locating valid components of said dynamic magnitude not giving rise to said measurement error; and
· reconstitution means (21) for reconstituting a new estimator $U$ representative of said dynamic magnitude from said valid components delivered by said observation sensors (5a, 5b, 5c, 5d,).

2. A device according to claim 1, **characterized in that** the validation means (15) and/or the error detector means (17) further comprise:

· third calculation means (27) for calculating a matrix of weights $P$ from said parity matrix $N$ and from said components $V_j$ ($V_1$, $V_2$, $V_3$, $V_4$, $V_5$) of the dynamic magnitude, the matrix of weights $P$ being equal to N.diag(V);
· third calculation means (27) for calculating a selection vector $S$ from said matrix of weights $P$ and from said parity vector $W$ for discriminating between relationships that are representative of consistency or inconsistency between said components $V_j$ ($V_1$, $V_2$, $V_3$, $V_4$, $V_5$) of the dynamic magnitude;
· third calculation means (27) for calculating a consistency quantification matrix $Q$ for quantifying the validity levels of said components $V_j$ of the dynamic magnitude;
· third calculation means (27) for deducing a confidence vector $R$ from the consistency quantification matrix $Q$ to give the confidence level of each component of the dynamic magnitude measured by each of the observation sensors; and
· third calculation means (27) for deducing a list of said valid components of said dynamic magnitude.

3. A device according to any one of claims 1 and 2, **characterized in that** it includes initialization means (11) for identifying the positions of said additional axes ($a_4$, $a_5$) relative to the main axes ($a_1$, $a_2$, $a_3$) with determined accuracy.

4. A device according to any one of claims 1 to 3, **characterized in that** the main axes comprise a first axis ($a_1$), a second axis ($a_2$), and a third axis ($a_3$) forming a right-handed orthogonal frame of reference, and **in that** at least one additional axis ($a_4$) forms an angle of 45° relative to the second axis ($a_2$), with the directions of the first and third axes ($a_1$, $a_3$) being symmetrical relative to the second axis ($a_2$)·

5. A device according to any one of claims 1 to 3, **characterized in that** the main axes ($a_1$, $a_2$, $a_3$) form a right-handed orthogonal frame of reference, and **in that** at least one additional axis ($a_4$) occupies a position that is symmetrical relative to the three main axes.

6. A device according to any one of claims 1 to 5, **characterized in that** the main sensors (5a, 5b, 5c) correspond to accelerometers measuring axial, radial, and tangential components of the dynamic magnitude, and **in that** said additional sensors (5d, 5e) correspond to redundant accelerometers.

7. A device according to any one of claims 1 to 6, **characterized in that** the dynamic magnitude corresponds to a vibration magnitude.

8. A device according to any one of claims 1 to 7, **characterized in that** said article (3) constituting the source of the dynamic magnitude is a rotary machine.

9. A method of validating measurements of a dynamic magnitude x coming from an article (3) on which there are placed main sensors (5a, 5b, 5c) on three concurrent main axes ($a_1$, $a_2$, $a_3$) forming a basis e={$e_1$ $e_2$ ... $e_p$} of a physical space having p=3 dimensions, the main sensors (5a, 5b, 5c) serving to measure components $V_j$ ($V_1$, $V_2$, $V_3$) of said dynamic magnitude *x*, the method being **characterized in that** it comprises the following steps:

    · measuring at least two additional components ($V_4$, $V_5$) of said dynamic magnitude by means of at least two additional sensors placed on said article (3) on at least two additional axes ($a_4$, $a_5$) that are concurrent with said three main axes ($a_1$, $a_2$, $a_3$) and that are not contained in any of the planes defined by any two of said three main axes ($a_1$, $a_2$, $a_3$), said main and additional axes forming a set a={$a_1$, $a_2$, $a_3$, ... $a_q$} of q observation axes ($a_1$, $a_2$, $a_3$, $a_4$, $a_5$), and said main and additional sensors forming observation sensors (5a, 5b, 5c, 5d, 5e);

    · determining an estimator *U* representative of said dynamic magnitude from said components $V_j$ ($V_1$, $V_2$, $V_3$, $V_4$, $V_5$) delivered by said observation sensors (5a, 5b, 5c, 5d, 5e);

    · validating said determination of the estimator *U* representative of the dynamic magnitude;

    · detecting a measurement error associated with said determination of the estimator *U* representative of the dynamic magnitude;

    · locating valid components of said dynamic magnitude that do not generate said measurement error; and

    · reconstituting a new estimator *U* representative of said dynamic magnitude from said valid components delivered by said observation sensors (5a, 5b, 5c, 5d, 5e); **in that** the determination of the estimator *U* representative of the dynamic magnitude comprises the following steps:

        · calculating an observation matrix *M* synthesizing the geometrical configuration of said observation axes, the observation matrix *M* of dimension *pxq* being defined by *M=C.A, C* being the matrix of the direction cosines of the basis e, and A being the matrix component of the set a of *q* axes;

        · calculating an estimation matrix *L* from said observation matrix *M* satisfying $L.^TM = I_p$; and

        · calculating said estimator *U* representative of the dynamic magnitude as a function of said estimation matrix *L* and of said components $V_j$ measured by said observation sensors; and **in that** the validation and/or error detection steps comprise the following steps:

        · calculating a parity matrix *N* from said observation matrix *M,* the parity matrix *N* being defined by $N.^TM = 0$; and

        · calculating a parity vector *W* associated with said parity matrix *N* and with said components $V_j$ ($V_1$, $V_2$, $V_3$, $V_4$, $V_5$) of the dynamic magnitude measured by the observation sensors, serving to verify the validity of the estimator *U* representative of the dynamic magnitude, or to detect a measurement error associated with said determination of the estimator *U,* the parity vector *W* being defined by *W=N.Z* where *Z* is a matrix representation of the measurement error.

10. A method according to claim 9, **characterized in that** the validation and/or error detector steps further comprise the following steps:

· calculating a matrix of weights $P$ from said parity matrix $N$ and from said components $V_j$ ($V_1$, $V_2$, $V_3$, $V_4$, $V_5$) of the dynamic magnitude, the matrix of weights P being equal to N.diag(V);

· calculating a selection vector $S$ from said matrix of weights $P$ and from said parity vector $W$ making it possible to discriminate between relationships that represent consistency or inconsistency between said components $V_j$ ($V_1$, $V_2$, $V_3$, $V_4$, $V_5$) of the dynamic magnitude;

· calculating a consistency quantification matrix $Q$ serving to quantify the validity levels of said components $V_j$ ($V_1$, $V_2$, $V_3$, $V_4$, $V_5$) of the dynamic magnitude;

· deducing a confidence vector $R$ from the coherent quantification matrix $Q$ serving to give the confidence level of each component of the dynamic magnitude as measured by each of the observation sensors; and

· deducing a list of said valid components of said dynamic magnitude.

11. A method according to any one of claims 9 and 10, **characterized in that** it includes an initialization step of identifying the positions of said additional axes ($a_4$, $a_5$) relative to the main axes ($a_1$, $a_2$, $a_3$) with determined accuracy.

12. A method according to any one of claims 9 to 11, **characterized in that** the dynamic magnitude corresponds to a vibration magnitude.

13. A computer program downloadable from a communications network and/or stored on a computer readable medium and/or executable by a microprocessor, the program being **characterized in that** it includes program code instructions for executing steps of the validation method according to at least one of claims 9 to 12 when executed on a computer.

FIG.1A

**P1**

| $a$ <br> Axes d'observation. <br> [E.3] | $V(t_{Lu})$ <br> Mesures en phase <br> d'initialisation. |

| $e$ <br> Base <br> [E.1] | $_aA$ <br> Forme matricielle de $a$. <br> [E.4] | $_vA$ <br> Forme matricielle de $a$. <br> [E.55], [E.58] |

| $C$ <br> Cosinus directeurs <br> de la base <br> [E.6] | $A$ <br> Choix des axes d'observation sous forme matriciel. |

**P3**

| $M$ <br> Matrice d'observation. <br> [E.8] | $_AN$ <br> Matrice de parité. <br> [E.17] | $V(t)$ <br> Mesure. |

| $_MN$ <br> Matrice de parité. <br> [E.17] | $N$ <br> Choix de la matrice de parité. | $P(t)$ <br> Matrice des poids <br> [E.19] | $W(t)$ <br> Vecteur de parité <br> [E.23] |

**P2**

| $S(t)$ <br> Vecteur de sélection des relations <br> [E.25] |

| $Q(t)$ <br> Matrice de quantification de la cohérence. <br> [E.27] |

**P5** **P4**

| $_JM(t)$ <br> Matrice d'observation du système mutilé <br> [E.40] | $J(t)$ <br> Indices des mesures valides. <br> [E.34] | $R(t)$ <br> Vecteur des résultats de la détection-localisation. <br> [E.29] |

| $_JL(t)$ <br> Matrice d'estimation du système mutilé. <br> [E.13] | $_JV(t)$ <br> Vecteur des mesures valides. <br> [E.41] |

| $U(t)$ <br> Estimateur. <br> [E.15] |

# FIG.1B

FIG.1C

FIG.2

FIG.3

FIG.4

FIG.5